# EUROPÄISCHE PATENTSCHRIFT

(11) **EP 0 974 013 B1**
(45) Veröffentlichungstag und Bekanntmachung des Hinweises auf die Patenterteilung: **03.07.2002**
(21) Anmeldenummer: 98929257.8
(22) Anmeldetag: 25.03.1998
(51) Int. Cl.: F16D 13/58

(54) **KUPPLUNG**
CLUTCH
EMBRAYAGE

(30) Priorität: 10.04.1997 DE 19714775
(43) Veröffentlichungstag der Anmeldung: 26.01.2000
(73) Patentinhaber: Siemens Aktiengesellschaft, 80333 München (DE)
(72) Erfinder: WALLRAFEN, Werner, D-65719 Hofheim (DE)
(86) Internationale Anmeldenummer: EP9801741
(87) Internationale Veröffentlichungsnummer: WO9845613

(56) Entgegenhaltungen:
- DE-A- 2 640 088
- GB-A- 2 082 697
- GB-A- 2 104 982
- US-A- 5 058 718

## Beschreibung

Die Erfindung betrifft eine Kupplung mit zumindest einem zwischen einer auf einer ersten die Antriebswelle bildenden Welle drehfest angeordneten Scheibe und einer auf einer die Abtriebswelle bildenden zweiten Welle drehfest und axial verschiebbar angeordneten Druckplatte zum Erzeugen eines Kraftschlusses zwischen der Scheibe und der Druckplatte vorgesehenen Reibbelag, mit einem Betätigungsmechanismus zum Bewegen der Druckplatte gegen die Kraft eines die Druckplatte in Richtung der Scheibe vorspannenden Federelementes und mit einer Sensoreinrichtung zur Erfassung der Verschleißgrenze des Reibbelags, wobei die Sensoreinrichtung ein an der Abtriebswelle angeordnetes, bewegliches Schaltteil aufweist..

Solche Kupplungen werden in heutigen Kraftfahrzeugen häufig zwischen einer Brennkraftmaschine und einem Getriebe angeordnet und sind damit bekannt. Die Scheibe ist hierbei häufig als Schwungscheibe ausgebildet und auf einer Antriebswelle der Brennkraftmaschine befestigt. Beim Erreichen der Verschleißgrenze weist der Reibbelag eine minimale Stärke auf und muß ausgewechselt werden.

Aus GB-A-2 104 982 ist eine Kupplung bekannt, die zwischen einer Druckplatte und der Schwungscheibe bzw. der Abtriebsscheibe Reibbeläge aufweist. Die Kupplung hat außerdem eine Einrichtung zur Erfassung der Verschleißgrenze des Reibbelags, die aus einem federnden Zapfen und aus einem Vorsprung an der Druckplatte besteht. Wenn sich die Reibbeläge abnutzen kommen der federnde Zapfen und der Vorsprung miteinander in Berührung, was ein Kontaktgeräusch verursacht und somit dem Benutzer das Abnutzen der Reibbeläge signalisiert.

Eine aus der Praxis bekannte Bremse hat in einem Reibbelag im Bereich der Verschleißgrenze ein von einem Signalstrom durchflossenen elektrischen Leiter. Bei einem Erreichen der Verschleißgrenze des Reibbelags wird der elektrische Leiter durchtrennt und der Signalstrom unterbrochen. Das Unterbrechen des Signalstroms signalisiert damit das Erreichen der minimalen Stärke des Reibbelages.

Diese Bremse hat den Vorteil, daß sie bei Erreichen einer minimalen Stärke des Reibbelages ein eindeutiges elektrisches Schaltsignal liefert.

Im Gegensatz zu analogen Signalen sind digitale Signale weitgehend temperaturunabhängig und einfach einem bestimmten Zustand zuzuordnen. Hierbei sind die erzeugten elektrischen Signale zudem von einer an der Betätigungseinrichtung (Pedal und Hebeleinrichtung) angeordneten Nachstelleinrichtung unabhängig. Weiterhin läßt sich mit geringem elektronischen Aufwand beispielsweise eine Kontrollampe auf einem Armaturenbrett des Kraftfahrleuges aktivieren.

Nachteilig bei der bekannten Bremse ist jedoch, daß sich die Kontaktierung der elektrischen Leiter in dem sich drehenden Reibbelag beispielsweise über Schleifkontakte oder Induktionsspulen sehr aufwendig und störanfällig gestaltet. Weiterhin weisen die elektrischen Leiter Fertigungstoleranzen auf und lassen sich häufig nicht zuverlässig in einer vorgesehenen Position in dem Reibbelag anordnen.

Der Erfindung liegt das Problem zugrunde, eine Kupplung der eingangs genannten Art so zu gestalten, daß ein Erreichen der minimalen Stärke des Reibbelages besonders genau, mit geringem Aufwand und ohne Gefahr von Fehlmessungen ermittelbar ist.

Dieses Problem wird erfindungsgemäß dadurch gelöst, daß das Schaltteil zum Betätigen eines feststehenden elektrischen Schalters ausgebildet ist und daß ein mit der Druckplatte verbundenes Sperrteil vor einem Erreichen der Verschleißgrenze des Reibbelags zum Haltern des Schaltteils in einer von dem elektrischen Schalter entfernten Stellung vorgesehen ist.

Durch diese Gestaltung ist der Schalter an einem feststehenden Bauteil der Kupplung - beispielsweise der Kupplungsglocke - angeordnet und läßt sich zur Kontaktierung fest verdrahten. Das mit der Druckplatte verbundene Sperrteil bewegt sich bei einem Verschleiß des Reibbelages mit der Druckplatte mit, während das Schaltteil feststeht. Vor Erreichen der Verschleißgrenze des Reibbelages wird das Schaltteil von dem Sperrteil gehalten. Beim Erreichen der Verschleißgrenze des Reibbelages wird das Schaltteil abrupt freigegeben und betätigt den Schalter bei Rotation der Druckplatte. Das Sperrteil und das Schaltteil sind einfach und mit geringen Toleranzen zu fertigende Bauteile. Hierdurch läßt sich die minimale Stärke des Reibbelages beispielsweise auf 0,1 mm genau ermitteln. Die Gefahr von Fehlmessungen wird durch den einfachen Aufbau der Sensoreinrichtung besonders gering gehalten.

Die erfindungsgemäße Kupplung gestaltet sich konstruktiv besonders einfach, wenn das Schaltteil an einem drehfest mit der zweiten Welle verbundenen Kupplungsdeckel befestigt ist. Solche Kupplungsdeckel sind meist zur Befestigung des Federelementes und des Betätigungsmechanismus vorgesehen und ohnehin axial unverschieblich drehfest mit der zweiten Welle verbunden.

Der Kupplungsdeckel wird in der Regel über als Bolzen ausgebildete Mitnehmer mit der Druckplatte verbunden. Die Mitnehmer sind meist in der Druckplatte eingepreßt und durchdringen eine Bohrung des Kupplungsdekkels. Hierbei gestaltet sich das Sperrteil gemäß einer anderen vorteilhaften Weiterbildung der Erfindung besonders kostengünstig, wenn es einteilig mit einem in der Druckplatte befestigten Mitnehmer für den Kupplungsdeckel gefertigt ist.

Das Schaltteil wird gemäß einer anderen vorteilhaften Weiterbildung der Erfindung oberhalb der Verschleißgrenze des Reibbelages zuverlässig in einer von dem Schalter entfernten Position gehalten, wenn das Schaltteil mit einem Ende schwenkbar gelagert und mit dem anderen Ende von dem Sperrteil in einer radial inneren Position gehalten ist. Bei Erreichen der Verschleißgrenze des Reibbelages wird die Bewegung des Schaltteils von dem Sperrteil freigegeben. Das Schaltteil bewegt sich anschließend durch die Fliehkraft nach außen und betätigt den Schalter.

Die erfindungsgemäße Kupplung weist besonders geringe Abmessungen auf, wenn das Schaltteil in einem Schacht verschieblich angeordnet ist.

Das Schaltteil könnte beim Erreichen der Verschleißgrenze des Reibbelages von der Fliehkraft bewegt werden. Nachteilig ist hierbei jedoch, daß Vibrationen ein Klappern des Schaltteils an dem Sperrteil hervorrufen können. Hierdurch könnten das Schaltteil und das Sperrteil beschädigt werden. Ein Klappern des Schaltteils an dem Sperrteil läßt sich gemäß einer anderen vorteilhaften Weiterbildung der Erfindung einfach vermeiden, wenn das Schaltteil von einem Federelement gegen das Sperrteil vorgespannt ist. Durch diese Gestaltung liegt das Schaltteil stets zuverlässig an dem Sperrteil an und wird unabhängig von der Fliehkraft gegen den Schalter bewegt.

Die Montage des elektrischen Schalters gestaltet sich gemäß einer anderen vorteilhaften Weiterbildung der Erfindung besonders einfach, wenn der elektrische Schalter an einer ein Gehäuse der Kupplung bildenden Kupplungsglocke befestigt ist.

Eine Fehlmessung durch ein Verschmutzen des elektrischen Schalters läßt sich gemäß einer anderen vorteilhaften Weiterbildung der Erfindung einfach vermeiden, wenn der elektrische Schalter einen Schutzgaskontakt oder magnetfeldempfindlichen Sensor und das Schaltteil einen Magneten zum Betätigen des Schutzgaskontaktes oder magnetfeldempfindlichen Sensors aufweist.

Der elektrische Schalter ist gemäß einer anderen vorteilhaften Weiterbildung der Erfindung besonders kostengünstig herstellbar, wenn er einen von dem Schaltteil durchtrennbaren elektrischen Leiter aufweist. Durch diese Gestaltung benötigt der elektrische Schalter zudem keine aufwendige Auswerteelektronik zur Erfassung eines von einem Schutzgaskontakt oder magnetfeldempfindlichen Sensor ermittelten Wertes und keinen elektronischen Speicher zum Abspeichern des Wertes.

Ein Durchtrennen des elektrischen Leiters läßt sich gemäß einer anderen vorteilhaften Weiterbildung der Erfindung einfach von einem Wackelkontakt, Kurzschluß oder einem Kabelbruch unterscheiden, wenn der elektrische Leiter mit einem elektrischen Widerstand in Reihe geschaltet ist.

Bei einem Durchtrennen des elektrischen Leiters entstehende Bruchstücke könnten in den Betätigungsmechanismus oder zwischen die Druckplatte und die Antriebsscheibe gelangen und einen sicheren Kraftschluß oder ein Betätigen der Druckplatte beeinträchtigen. Bruchstücke des elektrischen Leiters lassen sich gemäß einer anderen vorteilhaften Weiterbildung der Erfindung einfach vermeiden, wenn der elektrische Leiter eine einzelne Sollbruchstelle aufweist.

Der elektrische Leiter wird gemäß einer anderen vorteilhaften Weiterbildung der Erfindung zuverlässig durchtrennt, wenn das Schaltteil an seinem dem elektrischen Leiter zugewandten Ende scharfkantig gestaltet ist.

Ein Blockieren der Bewegung des Sperrteils durch das Schaltteil führt zu einem ständigen Kraftschluß zwischen der Druckplatte und der Scheibe und muß deshalb zuverlässig vermieden werden. Das Schaltteil wird gemäß einer anderen vorteilhaften Weiterbildung der Erfindung beim Erreichen der Verschleißgrenze des Reibbelages zuverlässig freigegeben, wenn es an seinem an dem Sperrteil anliegenden Ende im Längsschnitt spitz zulaufend gestaltet ist. Hierdurch wird die Gefahr eines Blockierens des Sperrteils deutlich vermindert.

Ein Blockieren der Bewegung des Sperrstiftes läßt sich gemäß einer anderen vorteilhaften Weiterbildung der Erfindung zuverlässig vermeiden, wenn das Schaltteil eine Sollbruchstelle aufweist.

Die Erfindung läßt zahlreiche Ausführungsformen zu. Zur weiteren Verdeutlichung ihres Grundprinzips sind zwei davon in der Zeichnung dargestellt und werden nachfolgend beschrieben. Diese zeigt in
- Figur 1: eine schematische Darstellung einer erfindungsgemäßen Kupplung in einem Längsschnitt,
- Figur 2: eine schematische Darstellung einer weiteren Ausführungsform der Erfindung.

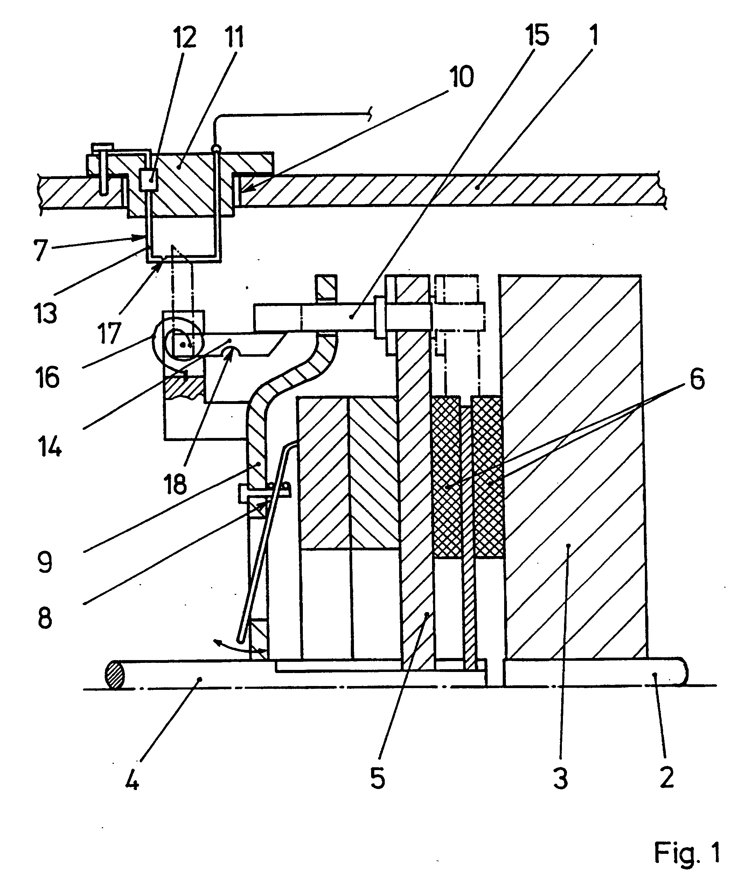

Die Figur 1 zeigt eine schematische Darstellung einer Hälfte einer erfindungsgemäßen Kupplung mit einer ein Gehäuse bildenden Kupplungsglocke 1 in einem Längsschnitt. Die Kupplung hat eine auf einer Antriebswelle 2 drehfest und axial unverschieblich angeordnete Schwungscheibe 3 und eine auf einer als Keilwelle ausgebildeten Abtriebswelle 4 drehfest und axial verschieblich angeordnete Druckplatte 5. Zwischen der Druckplatte 5 und der Schwungscheibe 3 sind Reibbeläge 6 zur Erzeugung eines Kraftschlusses zwischen der Druckplatte 5 und der Schwungscheibe 3 angeordnet. Die Druckplatte 5 ist hierzu mittels nicht dargestellter Federelemente gegen die Schwungscheibe 3 vorgespannt. Auf der der Schwungscheibe 3 abgewandten Seite der Druckplatte 5 ist ein Betätigungsmechanismus 8 zum Entfernen der Druckplatte 5 von der Schwungscheibe 3 vorgesehen. Der Betätigungsmechanismus 8 ist in einem fest mit der Abtriebswelle 4 verbundenen Kupplungsdeckel 9 angeordnet. Bei einem Verschleiß der Reibbeläge 6 bewegt sich die Druckplatte 5 in Richtung der Schwungscheibe 3, bis eine Verschleißgrenze der Reibbeläge 6 erreicht ist. Diese Verschleißgrenze kennzeichnet die minimale Stärke der Reibbeläge 6, bei der die Kupplung zuverlässig arbeitet. Diese Stellung ist in der Zeichnung strichpunktiert eingezeichnet.

Die Kupplung hat eine Sensoreinrichtung 7 mit einem elektrischen Schalter 11 zur Erzeugung eines elektrischen Signals beim Erreichen der Verschleißgrenze der Reibbeläge 6. Der Schalter 11 ist in einer Öffnung 10 der Kupplungsglocke 1 befestigt und hat einen mit einem elektrischen Widerstand 12 in Reihe geschalteten elektrischen Sensor-Leiter 13. Auf dem Kupplungsdeckel 9 ist ein Schaltteil 14 drehbar gelagert. Das Schaltteil 14 wird von einem in der Druckplatte 5 eingepreßten Sperrteil 15 in einer radial inneren Position gehalten. Weiterhin ist das Schaltteil 14 mittels eines spiralförmigen Federelementes 16 gegen das Sperrteil 15 vorgespannt.

Hierbei gibt das Sperrteil 15 das Schaltteil 14 bei einem Erreichen der Verschleißgrenze frei, so daß das Schaltteil 14 umgeklappt wird und in den Bereich des elektrischen Leiters 13 des Schalters 11 gelangt. Der elektrische Leiter 13 wird bei Rotation der Kupplung anschließend durchtrennt. Für eine definierte Trennung des elektrischen Leiters 13 weist dieser eine Sollbruchstelle 17 auf. Zudem ist das Schaltteil 14 an seinem freien Ende scharfkantig gestaltet.

Der mit dem elektrischen Leiter 13 in Reihe geschaltete Widerstand 12 ist mit der Kupplungsglocke 1 leitend verbunden. Das andere Ende des elektrischen Leiters 13 weist eine Verbindung mit einer nicht dargestellten Auswerteeinheit auf, die beispielsweise eine Kontrollampe auf einem Armaturenbrett aktiviert. Diese Kontrollampe signalisiert damit das Erreichen der Verschleißgrenze der Reibbeläge 6. Die Reibbeläge 6 müssen anschließend mit dem zerstörten Schalter 11 ausgetauscht werden. Zur Vermeidung eines Blockierens des Sperrteils 15 und damit der Bewegung der Druckplatte 5 ist das Schaltteil 14 mit seinem an dem Sperrteil 15 anliegenden Ende spitz zulaufend gestaltet und weist eine Sollbruchstelle 18 auf.

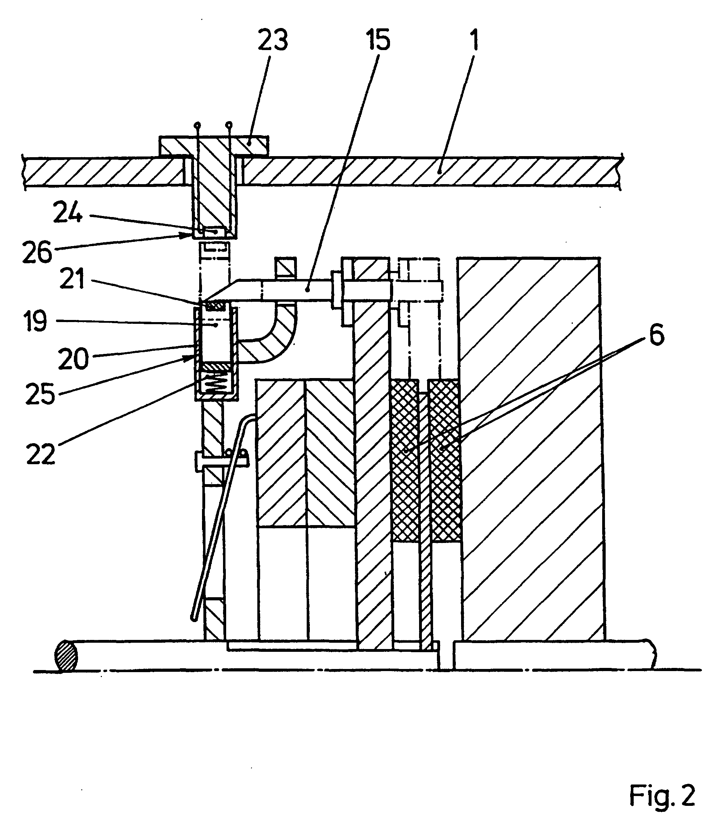

Die Figur 2 zeigt eine weitere Ausführungsform der erfindungsgemäßen Kupplung mit einer Sensoreinrichtung 26. Hierbei ist ein Schaltteil 19 in einem Schacht 20 axial verschiebbar angeordnet. Das Schaltteil 19 weist auf seinem an dem Sperrteil 15 anliegenden Ende einen Magneten 21 auf und ist mittels eines wendelförmigen Federelementes 22 gegen das Sperrteil 15 vorgespannt. In der Kupplungsglocke 1 ist ein elektrischer Schalter 23 mit einem Schutzgaskontakt 24 angeordnet. Beim Erreichen der Verschleißgrenze der Reibbeläge 6 wird das Schaltteil 19 von dem Sperrteil 15 freigegeben und gelangt mit dem Magneten 21 in eine zu dem Schutzgaskontakt 24 nahe Position. Diese Position ist in der Zeichnung strichpunktiert eingezeichnet. Hierdurch schaltet der Schutzgaskontakt 24 und signalisiert bei jeder Umdrehung, daß die Verschleißgrenze der Reibbeläge 6 erreicht ist. Das Schaltteil 19 hat in seinem Zentrum eine Ausnehmung 25. Hierdurch wird eine Bewegung des Sperrteils 15 auch nach dem Erreichen der Verschleißgrenze der Reibbeläge 6 ermöglicht.

## Patentansprüche

1. Kupplung mit mindestens einer auf einer die Antriebswelle (2) bildenden ersten Welle drehfest angeordneten Scheibe (3) und einer auf einer die Abtriebswelle (4) bildenden zweiten Welle drehfest und axial verschiebbar angeordneten Druckplatte (5) zum Erzeugen eines Kraftschlusses zwischen der Scheibe (3) und der Druckplatte (5) vorgesehenen Reibbelag (6), mit einem Betätigungsmechanismus (8) zum Bewegen der Druckplatte (5) gegen die Kraft eines die Druckplatte (5) in Richtung der Scheibe (3) vorspannenden Federelementes (16, 22) und mit einer Sensoreinrichtung (7, 26) zur Erfassung der Verschleißgrenze des Reibbelags (6), wobei die Sensoreinrichtung (7, 26) ein an die Abtriebswelle (4) angeordnetes, bewegliches Schaltteil (14, 19) aufweist, **dadurch gekennzeichnet, daß** das Schaltteil (14, 19) zum Betätigen eines feststehenden elektrischen Schalters (11, 23) ausgebildet ist und daß ein mit der Druckplatte (5) verbundenes Sperrteil (15) vor einem Erreichen der Verschleißgrenze des Reibbelags (6) zum Haltern des Schaltteils (14, 19) in einer von dem elektrischen Schalter (11, 23) entfernten Stellung vorgesehen ist.

2. Kupplung nach Anspruch 1, **dadurch gekennzeichnet, daß** das Schaltteil (14, 19) an einem drehfest mit der Abtriebswelle (4) verbundenen Kupplungsdeckel (9) befestigt ist.

3. Kupplung nach Anspruch 1 oder 2, **dadurch gekennzeichnet, daß** das Sperrteil (15) einteilig mit einem in der Druckplatte (5) befestigten Mitnehmer für den Kupplungsdeckel (9) gefertigt ist.

4. Kupplung nach einem der Ansprüche 1 bis 3, **dadurch gekennzeichnet, daß** das Schaltteil (14, 19) von einem Federelement (16, 22) gegen das Sperrteil (15) vorgespannt ist.

5. Kupplung nach einem der Ansprüche 1 bis 4, **dadurch gekennzeichnet, daß** der elektrische Schalter (11, 23) an einer ein Gehäuse der Kupplung bildenden Kupplungsglocke (1) befestigt ist.

6. Kupplung nach einem der Ansprüche 1 bis 5, **dadurch gekennzeichnet, daß** das Schaltteil (14) mit einem Ende schwenkbar gelagert und mit dem anderen Ende von dem Sperrteil (15) in einer radial inneren Position gehalten ist.

7. Kupplung nach einem der Ansprüche 1 bis 6, **dadurch gekennzeichnet, daß** der elektrische Schalter (11) einen von dem Schaltteil (14) durchtrennbaren elektrischen Leiter (13) aufweist.

8. Kupplung nach Anspruch 7, **dadurch gekennzeichnet, daß** der elektrische Leiter (13) mit einem elektrischen Widerstand (12) in Reihe geschaltet ist.

9. Kupplung nach Anspruch 7 oder 8, **dadurch gekennzeichnet, daß** der elektrische Leiter (13) eine einzelne Sollbruchstelle (17) aufweist.

10. Kupplung nach einem der Ansprüche 1 bis 9, **dadurch gekennzeichnet, daß** das Schaltteil (14) an seinem dem elektrischen Leiter (13) zugewandten Ende scharfkantig gestaltet ist.

11. Kupplung nach einem der Ansprüche 1 bis 10, **dadurch gekennzeichnet, daß** das Schaltteil (14) an seinem an dem Sperrteil (15) anliegenden Ende im Längsschnitt spitz zulaufend gestaltet ist.

12. Kupplung nach einem der Ansprüche 1 bis 11, **dadurch gekennzeichnet, daß** das Schaltteil (14) eine Sollbruchstelle (18) aufweist.

13. Kupplung nach einem der Ansprüche 1 bis 5, **dadurch gekennzeichnet, daß** das Schaltteil (19) in einem Schacht (20) verschieblich angeordnet ist.

14. Kupplung nach einem der Ansprüche 1 bis 5 oder 13, **dadurch gekennzeichnet, daß** der elektrische Schalter (23) einen Schutzgaskontakt (24) oder magnetfeldempfindlichen Sensor aufweist und das Schaltteil (19) einen Magneten (21) zum Betätigen des Schutzgaskontaktes (24) oder magnetfeldempfindlichen Sensors aufweist.

## Claims

1. Clutch having at least one friction lining (6), provided between a disc (3) arranged in a rotationally secure fashion on a first shaft, forming the drive shaft (2), and a pressure plate (5) arranged in a rotationally secure and axially displaceable fashion on a second shaft, forming the output shaft (4), for producing a grip between the disc (3) and the pressure plate (5), having an actuating mechanism (8) for moving the pressure plate (5) against the force of a spring element (16, 22) which biases the pressure plate (5) in the direction of the disc (3), and having a sensor device (7, 26) for detecting the limit of wear of the friction lining (6), the sensor device (7, 26) having a movable switching part (14, 19) arranged on the output shaft (4), **characterized in that** the switching part (14, 19) is constructed for actuating a fixed electric switch (11, 23), and **in that** a blocking part (15) connected to the pressure plate (5) is provided for holding the switching part (14, 19) in a position remote from the electric switch (11, 23) before the limit of wear of the friction lining (6) has been reached.

2. Clutch according to Claim 1, **characterized in that** the switching part (14, 19) is fastened on a clutch cover (9) connected in a rotationally secure fashion to the output shaft (4).

3. Clutch according to Claim 1 or 2, **characterized in that** the blocking part (15) is produced in one piece with a driver, fastened in the pressure plate (5), for the clutch cover (9).

4. Clutch according to one of Claims 1 to 3, **characterized in that** the switching part (14, 19) is biased by a spring element (16, 22) against the blocking part (15).

5. Clutch according to one of Claims 1 to 4, **characterized in that** the electric switch (11, 23) is fastened on a clutch bell (1) forming a housing of the clutch.

6. Clutch according to one of Claims 1 to 5, **characterized in that** the switching part (14) is pivotably mounted with one end and is held in a radially inner position by the blocking part (15) with the other end.

7. Clutch according to one of Claims 1 to 6, **characterized in that** the electric switch (11) has an electric conductor (13) which can be severed by the switching part (14).

8. Clutch according to Claim 7, **characterized in that** the electric conductor (13) is connected in series with an electric resistor (12).

9. Clutch according to Claim 7 or 8, **characterized in that** the electric conductor (13) has a single rupture joint (17).

10. Clutch according to one of Claims 1 to 9, **characterized in that** the switching part (14) is of sharp-edged configuration at its end facing the electric conductor (13).

11. Clutch according to one of Claims 1 to 10, **characterized in that** the switching part (14) is configured to run to a tip in longitudinal section at its end adjoining the blocking part (15).

12. Clutch according to one of Claims 1 to 11, **characterized in that** the switching part (14) has a rupture joint (18).

13. Clutch according to one of Claims 1 to 5, **characterized in that** the switching part (19) is arranged displaceably in a shaft (20).

14. Clutch according to one of Claims 1 to 5 or 13, **characterized in that** the electric switch (23) has a reed contact (24) or a sensor sensitive to magnetic fields, and the switching part (19) has a magnet (21) for actuating the reed contact (24) or sensor sensitive to magnetic fields.

## Revendications

1. Embrayage comportant au moins une garniture de frottement (6) entre un disque (3) disposé fixe en rotation sur un premier arbre, constituant l'arbre d'entraînement (2), et une plaque de pression (5) disposée fixe en rotation et mobile axialement sur un deuxième arbre, constituant l'arbre entraîné (4), pour réaliser un couplage par conjugaison de forces entre le disque (2) et la plaque de pression (5), l'embrayage comportant également un mécanisme d'actionnement (8) pour déplacer la plaque de pression (5) en s'opposant à la force d'un élément de ressort (16, 22) mettant en pré-serrage la plaque de pression (5) dans la direction du disque (3), et un dispositif de détection (7, 26) pour déterminer la limite d'usure de la garniture de frottement (6), le dispositif de détection (7, 26) présentant une pièce d'actionnement (14, 19) mobile, disposée sur l'arbre entraîné (4),
**caractérisé en ce que** la pièce d'actionnement (14, 19) est réalisée pour commander un interrupteur électrique en position fixe (11, 23), et **en ce qu'**une pièce de blocage (15), reliée à la plaque de pression (5), est prévue pour maintenir la pièce d'actionnement (14, 19) dans une position éloignée de l'interrupteur électrique (11, 23), avant que soit atteinte la limite d'usure de la garniture de frottement (6).

2. Embrayage suivant la revendication 1, **caractérisé en ce que** la pièce d'actionnement (14, 19) est fixée sur un couvercle d'embrayage (9) qui est relié, fixe en rotation, avec l'arbre entraîné (4).

3. Embrayage suivant la revendication 1 ou la revendication 2, **caractérisé en ce que** la pièce de blocage (15) est réalisée, en formant une seule pièce, avec un entraîneur du couvercle d'embrayage (9), fixé dans la plaque de pression (5).

4. Embrayage suivant l'une des revendications 1 à 3, **caractérisé en ce que** la pièce d'actionnement (14, 19) est mise en pré-tension contre la pièce de blocage (15) par un élément formant ressort (16, 22).

5. Embrayage suivant l'une des revendications 1 à 4, **caractérisé en ce que** l'interrupteur électrique (11, 23) est fixé sur une cloche d'embrayage (1) formant un carter de l'embrayage.

6. Embrayage suivant l'une des revendications 1 à 5, **caractérisé en ce que** la pièce d'actionnement (14) est montée pivotante à une extrémité et est, à l'autre extrémité, maintenue, par la pièce de blocage (15), dans une position intérieure radialement.

7. Embrayage suivant l'une des revendications 1 à 6, **caractérisé en ce que** l'interrupteur électrique (11) présente un conducteur électrique (13) pouvant être coupé par la pièce d'actionnement (14).

8. Embrayage suivant la revendication 7, **caractérisé en ce que** le conducteur électrique (13) est branché en série avec une résistance électrique (12).

9. Embrayage suivant la revendication 7 ou la revendication 8, **caractérisé en ce que** le conducteur électrique (13) présente un seul point de rupture programmé (17).

10. Embrayage suivant l'une des revendications 1 à 9, **caractérisé en ce que** la pièce d'actionnement (14) est conçue avec une arête vive à son extrémité tournée vers le conducteur électrique (13).

11. Embrayage suivant l'une des revendications 1 à 10, **caractérisé en ce que** l'extrémité de la pièce d'actionnement (14) située contre la pièce de blocage (15)se termine en pointe, en coupe longitudinale.

12. Embrayage suivant l'une des revendications 1 à 11, **caractérisé en ce que** la pièce d'actionnement (14) présente un point de rupture programmé(18).

13. Embrayage suivant l'une des revendications 1 à 5, **caractérisé en ce que** la pièce d'actionnement (19) est disposée en pouvant coulisser dans un guide (20).

14. Embrayage suivant l'une des revendications 1 à 5 ou 13, **caractérisé en ce que** l'interrupteur électrique (23) présente un contact (24) sous atmosphère protectrice ou un détecteur sensible au champ magnétique et **en ce que** la pièce d'actionnement (19) présente un aimant (21) pour actionner le contact sous atmosphère protectrice (24), ou le détecteur sensible au champ magnétique.
